# EUROPEAN PATENT SPECIFICATION

(11) **EP 2 403 166 B1**
(45) Date of publication and mention of the grant of the patent: **21.01.2015**
(21) Application number: 10290369.7
(22) Date of filing: 02.07.2010
(51) Int. Cl.: H04B 10/2575

(54) **Base station apparatus with a central unit and remote unit**
Basisstationsvorrichtung mit einer Zentral- und einer Ferneinheit
Appareil de station de base avec une unité centrale et une unité distante

(43) Date of publication of application: 04.01.2012
(73) Proprietor: ALCATEL LUCENT, 92100 Boulogne-Billancourt (FR)
(72) Inventor: Maier, Simone, 70656 Stuttgart (DE); Haslach, Christoph, 70178 Stuttgart (DE); Templ, Wolfgang, 74372 Sersheim (DE); Kuebart, Wolfgang, 70193 Stuttgart (DE)
(74) Representative: Wetzel, Emmanuelle

(56) References cited:
- US-A1- 2004 106 435
- JAE-YOUNG KIM ET AL: "Optically Injection-locked Self-oscillating HBT MMIC Optoelectronic Mixer for Bi-directional Fiber-fed Wireless Links", MICROWAVE SYMPOSIUM, 2007. IEEE/MTT-S INTERNATIONAL, IEEE, PI, 1 June 2007 (2007-06-01), pages 237-240, XP031111890, ISBN: 978-1-4244-0687-6
- CHOI C-S ET AL: "Optically Injection-Locked Self-Oscillating Optoelectronic Mixers Based on InP-InGaAs HPTs for Radio-on-Fiber Applications", IEEE PHOTONICS TECHNOLOGY LETTERS, IEEE SERVICE CENTER, PISCATAWAY, NJ, US, vol. 17, no. 11, 1 November 2005 (2005-11-01), pages 2415-2417, XP011141406, ISSN: 1041-1135, DOI: DOI:10.1109/LPT.2005.857624

## Description

### Field of the invention

The invention relates to a base station with a central and a remote unit, the central and the remote unit being coupled by optical channels for transmitting optical signals from the central unit to the remote unit and vice versa.

### Background and related art

In base stations of a wireless telecommunication network signals are exchanged between the remote unit and the central unit and vice versa. It is suggested to use an optically injection-locked self-oscillating mixer (OIL-SOM) for the generation of intermediate frequency signals from the exchanged mixed optical and electrical input signals. The OIL-SOM has an optical input and an electrical input and an electrical output. In an OIL-SOM the two input signals, optical and electrical, are mixed and output at the electrical output.

Jae-Young Kim et al. Disclose in "Opticall Incetion-locked Self-oscillating HBT MMIC Optoelectronic Mixer for Bi-directional Fiber-fed Wireless Links" (Microwave Symposium, 2007, IEEE/MTT-S International IEEE, pages 237-240, ISBN 978-1-4244-0687-6) a 30GHz bi-directional fiber-fed wireless link by using an optically injection-locked self-oscillating HBT optoelectronic mixer as a harmonic frequency up- and down-converter.

### Summary of the invention

It is the object of the present invention to provide an improved base station apparatus. This object is achieved by a base station according to independent claim 1. Embodiments of the invention are given in the dependent claims.

The invention provides a base station apparatus comprising a central unit for signal processing and a remote unit. The remote unit comprises an uplink antenna and a downlink antenna. The uplink antenna and the downlink antenna may also be comprised by one single antenna. In other words, downlink and uplink data may be transmitted via the same antenna. The central unit and the remote unit are connected by a first and a second optical channel. The optical channels may for example be fiber optic cables. The remote unit further comprises first receiving means for receiving a first digitally modulated optical signal from the central unit via the first optical channel. The first receiving means comprise an optically injection-locked self-oscillating mixer (OIL-SOM). The optically injection-locked self-oscillating mixer comprises an electrical input, an optical input and an electrical output. The optically injection-locked self-oscillating mixer is adapted to mix the signal being input at the electrical input with the signal being input at the optical input in order to mix the two input signals and to output the mixed signal at the electrical output. The first receiving means further comprise a first converter for converting the first digitally modulated optical signal into a first digitized electrical signal. First transmitting means in the remote unit are adapted for transmitting a second digitally modulated optical signal to the central unit via the second optical channel. The first transmitting means comprise a second converter for converting the second digitized electrical signal into the second digitally modulated optical signal. The remote unit further comprises a first encoder for encoding a first analogue electrical signal into the second digitized electrical signal.

The remote unit is adapted for communicating with a central unit via the first and the second optical channel. Optical signals may be transmitted by the first transmitting means, while optical signals may be received by the first receiving means. It is to be noted that the optical signals transmitted between the remote unit and the central unit and vice versa are digitally modulated optical signals. The first receiving means comprise a first converter. This converter is adapted for converting the first digitally modulated optical signal into the first digitized electrical signal. Thus, the first converter may also be referred to as an opto-electrical converter.

The central unit comprises a third converter for receiving the second digitally modulated optical signal and for converting the second digitally modulated optical signal into a third digitized electrical signal. The third converter may for example be a photodiode. The central unit comprises second transmitting means for transmitting the first digitally modulated optical signal to the remote unit via the first optical channel. The central unit further comprises a second encoder for encoding a second analogue electrical signal into a fourth digitized electrical signal.

The central unit is adapted to communicate with the remote unit via the first and second optical channels. The central unit comprises second transmitting means for transmitting a first digitally modulated optical signal to the remote unit. Digital optical signals may be received from the remote unit by the third converter in the central unit. The third converter may for example be a photodiode.

According to embodiments of the invention the uplink antenna and the downlink antenna are comprised by one single uplink and downlink antenna. In other words the uplink and downlink antenna is adapted to receive and transmit signals from and to wireless terminals. Wireless terminals may for example be PDAs, mobile phones and/or mobile computers. In general, a wireless terminal is any user device, which communicates in a wireless telecommunication system with a base station according to embodiments of the invention. Thus, communication with a wireless terminal may be performed by only one antenna in uplink and downlink direction.

According to embodiments of the invention the first transmitting means comprise a first light source for emitting a first light beam. The second transmitting means comprise a second light source for emitting a second light beam. In other words the first light source transmits a first light beam from the remote unit to the central unit via the second optical channel. The second light source transmits a second light beam from the central unit to the remote unit via the first optical channel. It is to be noted that the first and second light beam carry digitized information. The first light beam comprises the second digitally modulated optical signal and the second light beam comprises the first digitally modulated optical signal. The digitally modulated optical signals are modulated onto the respective light beam.

According to embodiments of the invention the first and the second light source are located in the central unit. The first light source is located in the central unit, but the first light beam emitted by the first light source is used for transmitting the second digitally modulated optical signal from the remote unit to the central unit. Therefore the first light source emits the first light beam to the remote unit via a third optical channel. The first light beam carries at this point no information and is not modulated. In the remote unit the first light beam is reflected by a mirror through the second optical channel back to the third converter in the central unit. The mirror comprises a modulator, which modulates the first light beam. Thus, when the first light beam is reflected from the remote unit to the central unit, the first light beam carries information, becoming the second digitally modulated optical signal. In the central unit the first light beam is received by the third converter which is in some embodiments a photodiode. In other words, the first light beam is transmitted from the first light source in the central unit to the mirror in the remote unit. The mirror comprises a modulator, which modulates the first light beam by the second digitized electrical signal. The mirror reflects the first light beam through the second optical channel to the third converter in the central unit.

According to embodiments of the invention the central unit comprises a splitter for splitting the second light beam of the second light source into at least a third and a fourth light beam. The central unit further comprises a first local oscillator for generating a first local oscillator frequency. The third light beam is modulated by the first local oscillator frequency with a modulator. The fourth digitized electrical signal is used for modulating the fourth light beam in another modulator. The third light beam and the fourth light beam are received by the first receiving means of the remote unit. The third light beam is used as the optical input signal of the optically injection-locked self-oscillating mixer of the first receiving means in the remote unit. The fourth light beam carries the information, which shall be transmitted via the downlink antenna to a wireless terminal. The fourth light beam is received by the first converter. In other words, the first converter converts the first digitally modulated optical signal, which is carried by the fourth light beam, into a first digitized electrical signal. The first digitized electrical signal may then be further treated and transmitted to a wireless terminal.

According to embodiments of the invention the central unit further comprises a second local oscillator. The splitter splits the second light beam into the third, the fourth and a fifth light beam, wherein the fifth light beam is modulated by a second local oscillator frequency of the second local oscillator in yet another modulator. The fifth light beam is also received by the first converter of the receiving means in the remote unit. Because the fifth and the fourth light beam are converted in the first converter into the first digitized electrical signal, the frequencies of the fifth and fourth light beam are mixed. Thus, the first digitized electrical signal, which is the output signal of the first converter, has a frequency, which is a combination of the second local oscillator frequency and the first digitally modulated optical signal, which carries the information to be transmitted to a wireless terminal. The second local oscillator facilitates the separation of the third, the fourth, and the fifth light beam in the remote unit. Further, the second local oscillator frequency is mixed with the fourth digitized signal. Hence, the fourth digitized signal is mixed upwards or downwards by the second local oscillator frequency. Preferably, the first local oscillator frequency and the second local oscillator frequency are adapted to facilitate a separation of light beams in the remote unit. Therefore, their frequencies have to be chosen appropriately.

According to embodiments of the invention the uplink antenna is adapted for receiving an analogue uplink signal. A first amplifier in the remote unit is adapted for amplifying the analogue uplink signal. The amplified uplink signal is adapted to be put into the optically injection-locked self-oscillating mixer (OIL-SOM) at the electrical input. A filter is adapted for filtering the electrical output signal of the optically injection-locked self-oscillating mixer. The filtered electrical output signal is the first analogue electrical signal. The first encoder is adapted to encode the first analogue electrical signal into the second digitized electrical signal. The third converter is adapted for converting the second digitized electrical signal into the second digitally modulated optical signal by modulating the first light beam with the first digitized electrical signal.

The third converter, which is located in the central unit, is adapted for receiving the second digitally modulated optical signal and converting it into the third digitized electrical signal. The third converter may for example be a photodiode. The third digitized electrical signal is adapted to be processed by signal processing means in the central unit. Thus, the uplink antenna may receive an analogue uplink signal, which is then transmitted over the second optical channel digitally from the remote unit to the central unit, where the information, which has been transmitted via the analogue uplink signal is received as a digital electrical signal. Digital transmission via the second optical channel is advantageous for avoiding quality losses and for allowing digital signal treatment such as digital regeneration of the signal.

In downlink direction an analogue downlink signal is the second analogue electrical signal. The analogue downlink signal may for example be received from a central network entity or generated in the base station. The second encoder encodes the second analogue electrical signal into the fourth digitized electrical signal. The first optical channel is adapted to transmit the third, the fourth and the fifth light beam to the first receiving means of the remote unit. The first receiving means comprise optionally an optical separator. If the first receiving means do not comprise an optical separator, signal separation is performed by the modulation frequencies of the third, the fourth and the fifth light beam. Separation can be performed without using an optical separator by choosing appropriate modulation frequencies.

The optical separator is adapted to separate the fifth light beam from the third and the fourth light beam. The separator is further adapted to transmit the fifth light beam to the optical input of the optically injection-locked self-oscillating mixer. The first converter is adapted to convert the third and the fourth light beam into the first digitized electrical signal. The first converter may for example be a photodiode. Because the third and the fourth light beam are combined in the first converter, the resulting first digitized electrical signal has a frequency, which is a combination of the modulation frequencies of the third and the fourth light beam. The first converter is further adapted to transmit the first digitized electrical signal to a class S power amplifier.

Class-S amplifiers are class-D-amplifiers with a Delta-Sigma-Modulator at the input. The DSM converts the analog input signal to digital pulses, which switch the amplifier on and off. The amplified analog signal is regained from the digital pulses by simple electrical filtering at the output of the amplifier stage. In other words: The input signal is converted to a sequence of pulses whose average value is directly proportional to the amplitude of the signal at that time. The final switching output consists of a train of pulses whose width is a function of the amplitude and frequency of the signal being amplified. The output contains in addition to the required amplified signal unwanted spectral components, which are removed by a filter. The filter may for example be made with inductors and capacitors. Class S amplifiers are mostly applied in radio frequency setups.

The class S power amplifier is adapted to amplify the first digitized electrical signal. The class S power amplifier comprises further a filter for converting the amplified first digitized signal into a third analogue electrical signal. The downlink antenna is adapted to emit the third analogue electrical signal into the air.

In downlink direction the signal to be transmitted is analogue and digitized in the second encoder into a digitized electrical signal. This is the fourth digitized electrical signal, which is modulated onto the fourth light beam. Thus, the information to be transmitted to a wireless terminal via the downlink antenna is transmitted digitally from the central unit to the remote unit. A digital transmission is advantageous for avoiding quality losses and for allowing digital signal processing. The fifth light beam may be used in this embodiment as the optical input signal of the optically injection-locked self-oscillating mixer. The optically injection-locked self-oscillating mixer mixes in this case the uplink signal with the modulation frequency of the fifth light beam, which is the second local oscillator frequency. Thus, the second local oscillator frequency is the mixing frequency for the uplink signal.

According to embodiments of the invention the uplink antenna is adapted for receiving an analogue uplink signal. The first amplifier in the remote unit is adapted to amplify the analogue uplink signal. The amplified uplink signal is the first analogue electrical signal. The uplink signal may for example be transmitted from a wireless terminal. The first analogue electrical signal is then digitized by an encoder. The output of the encoder is the second digitized electrical signal, which is used as the electrical input signal of the optically injection-locked self-oscillating mixer. The electrical input of the optically injection-locked self-oscillating mixer is adapted to receive the second digitized electrical signal.

A diplexer is adapted to receive the electrical output signal of the optically injection-locked self-oscillating mixer. The electrical output signal comprises the second digitized electrical signal. The diplexer is further adapted to transmit the second digitized electrical signal to the second converter. The second converter being adapted to convert the second digitized electrical signal into the second digitally modulated optical signal by modulating the first light beam with the second digitized electrical signal. The third converter is adapted for receiving the second digitally modulated optical signal via the second optical channel. The third converter is further adapted to convert the second digitally modulated optical signal into the third digitized electrical signal. The third digitized electrical signal may further be processed by signal processing means in the central unit.

In downlink direction an analogue downlink signal is the second analogue electrical signal. The analogue downlink signal may for example be generated in the base station or received by another network entity. The second encoder is adapted to encode the second analogue electrical signal into the fourth digitized electrical signal. The first optical channel is adapted to transmit the third and fourth light beam to the first receiving means of the remote unit. The third and the fourth light beam are the first digitally modulated optical signal. Hence the first digitally modulated optical signal comprises the third and the fourth light beam. A separation of the light beams may be performed in the remote unit by a separator or by separating the light beams by choosing appropriate frequencies for easily separating them. The optical input of the optically injection-locked self oscillating mixer is adapted to receive the first digitally modulated optical signal. In this case the first digitally modulated optical signal contains two optical components. The first component corresponds to the third light beam and the second component corresponds to the fourth light beam.

The electrical output signal of the OIL-SOM contains combinations of frequencies from the optical and electrical inputs due to the mixing process in the OIL-SOM, including the downlink signal originating from the second optical component and the uplink signal originating from the first optical component and the electrical input signal..

The electrical output signal of the optically injection-locked self-oscillating mixer comprises the first digitized electrical signal and the second digitized electrical signal, which has been mixed upwards or downwards in the OIL-SOM. The electrical output signal is transmitted to the diplexer, which is adapted to transmit the first digitized electrical signal to a second amplifier. The second amplifier comprises a filter for converting the first digitized signal into a third analogue electrical signal. The third analogue electrical signal may then be transmitted as an analogue downlink signal to a wireless terminal via the downlink antenna.

The diplexer is further adapted to convert the first digitized signal into a third analogue electrical signal, the second amplifier is further adapted to amplify the third analogue electrical signal.

In downlink direction the analogue downlink signal is transmitted together with the first local oscillator frequency to the first receiving means in the remote unit. The first local oscillator frequency is used to modulate the uplink signal, while the downlink signal is separated from the uplink signal in a diplexer. It is to be noted that the downlink signal is first received or generated in the base station as an analogue signal and then transmitted as a digital signal to the remote unit from the central unit. By transmitting the signal digitally, signal quality losses are avoided and digital signal processing is enabled. The same applies for the uplink direction.

According to embodiments-of the invention the Class-S optically injection-locked self-oscillating mixer comprises a first and a second optical input. The optically injection-locked self-oscillating mixer further comprises a first and a second electrical input and a filter. The first and second optical inputs are both adapted to receive the third and fourth light beam. The first electrical input is used for putting in the second digital electrical signal, which is then modulated by the first local oscillator frequency.

According to embodiments of the invention the first converter is a photodiode or a phototransistor. The light source may for example be a laser or a light emitting diode.

According to embodiments of the invention the optical channels are one or more optical fibers.

According to embodiments of the invention the optical channels are free space optical paths.

### Brief description of the drawings

In the following preferred embodiments of the invention will be described, by way of example only, and with reference to the drawings in which:
- Figure 1: is a block diagram of a base station with a central unit and a remote unit connected by two optical channels;
- Figure 2: is a block diagram of a base station with a central unit and a remote unit connected by two optical channels, the remote unit comprising a diplexer;
- Figure 3: is a schematic view of an optically injection-locked self-oscillating mixer; and
- Figure 4: is a schematic view of an optically injection-locked self-oscillating mixer with two optical inputs and two electrical inputs.

### Detailed description

Like numbered elements in these Figs. are either identical elements or perform the same function. Elements which have been discussed previously will not necessarily be discussed in later Figs. if the function is identical.

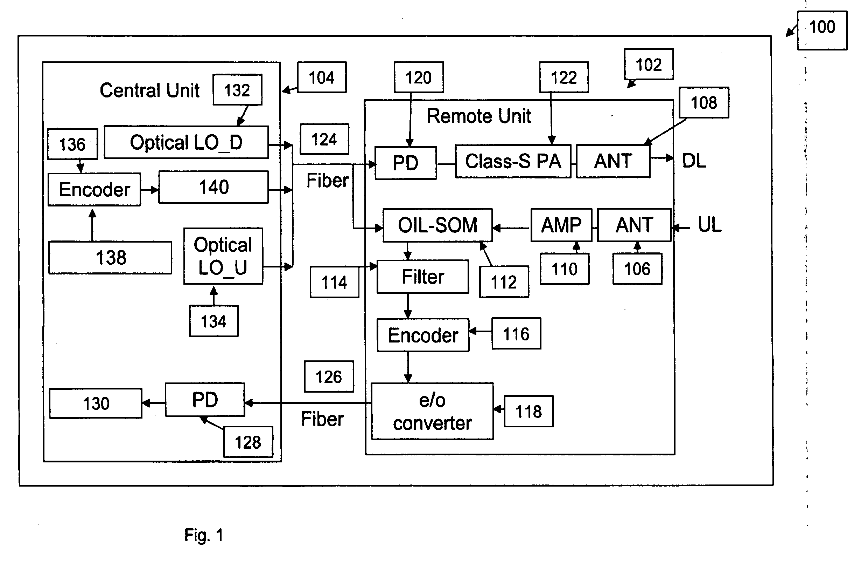

Fig. 1 is a block diagram of a base station 100 with a remote unit 102 and a central unit 104. The remote unit 102 comprises an uplink antenna 106 and a downlink antenna 108. It is to be noted that the uplink antenna and the downlink antenna may also be comprised by one single antenna. Then, uplink and downlink signals would be transmitted and received by the same antenna. The remote unit 102 further comprises a first amplifier 110, an optically injection-locked self-oscillating mixer 112 (OIL-SOM), a filter 114, a first encoder 116, and a third converter 118. The remote unit further comprises a photodiode 120 and a class S amplifier 122.

In downlink direction signals may be transmitted from the central unit 104 to the remote unit 102 via a first optical channel 124. In uplink direction signals may be transmitted from the remote unit 102 to the central unit 104 via a second optical channel 126. The first optical channel 122 and the second optical channel 126 may for example be optical fiber cables.

The central unit 104 comprises a photodiode 128 for receiving signals from the remote unit 102. The photodiode 128 is electrically connected to a signal processing circuit 130, in which an uplink signal may further be processed.

The central unit 104 further comprises a first local oscillator 132, a second local oscillator 134, a second encoder 136 and receiving means 138 for receiving an analogue downlink signal, which may for example be generated in the base station or received by another entity in the base station. A light source 140 is adapted for transmitting a light beam to a splitter (not depicted).

In operation, an uplink signal is received by antenna 106 and amplified by amplifier 110. The analogue uplink signal is then input into the optically injection-locked self-oscillating mixer (OIL-SOM) 112 at the electrical input. At the same time an optical input signal is input at the optical input of the OIL-SOM 112. The optical input signal originates from the second optical local oscillator 134. The second local oscillator frequency generated by optical local oscillator 134 is transmitted via the first optical channel 124 to the optical input of the OIL-SOM 112. Thus, the analogue uplink signal is mixed with the second local oscillator frequency in the OIL-SOM 112. The electrical output signal of OIL-SOM 112 is then input into filter 114 for filtering. The output signal of filter 114 may in this case also be referred to as the first analogue electrical signal (see above). After filtering the electrical output signal is encoded by encoder 116 into a digitized electrical uplink signal. The digitized electrical uplink signal may also be referred to as the second digitized electrical signal (see above). The digitized electrical uplink signal is then converted by electro-optical converter 118 into a digitized optical uplink signal, which is then transmitted via the second optical channel 126 to photodiode 128, where the digitized optical uplink signal is converted into an electrical digitized uplink signal. The digitized optical uplink signal may also be referred to as the second digitally modulated optical signal and the output signal of photodiode 128 may also be referred to as the third digitized electrical signal (see above). The electro-optical converter 118 emits a first light beam to photodiode 128. The first light beam is modulated by the digitized electrical uplink signal. The electrical digitized uplink signal is then further processed by signal processing circuit 130. Signal processing can take place in the digital domain, because it is a digital signal. This has several advantages such as signal regeneration.

In downlink direction an analogue downlink signal is received by receiving means 138 and encoded into a digital downlink signal by encoder 136. The analogue downlink signal may also be referred to as the second analogue electrical signal and the digital downlink signal at the output of encoder 136 may also be referred to as the fourth digitized electrical signal (see above). Light source 140 emits a second light beam. The second light beam is then split into a third, a fourth, and a fifth light beam by a splitter (not depicted). The second light beam is modulated by the first local oscillator frequency originating from optical local oscillator 132. The third light beam is modulated with the digitized downlink signal. After modulation the third light beam carries the digitized downlink signal, which may also be referred to as the first digitally modulated optical signal (see above). The fourth light beam is modulated by the second local oscillator frequency originating from optical local oscillator 104. Modulation may be performed in all three cases by a respective modulator (not depicted). The third, the fourth and the fifth light beam are transmitted via first optical channel 124 to the remote unit 102. As already explained above, the fifth light beam, which is modulated by the second local oscillator frequency originating from optical local oscillator 134, is used as optical input signal in the OIL-SOM 112. The fourth and the fifth light beam are converted in photodiode 120 into a digitized electrical signal. The output signal of photodiode 120 may also be referred to as the first digitized electrical signal (see above). The first digitized electrical signal is now a combination of the first local oscillator frequency and the frequency of the downlink signal. The digitized electrical signal is amplified in class-S amplifier 122 and transmitted to a wireless terminal via downlink antenna 108.

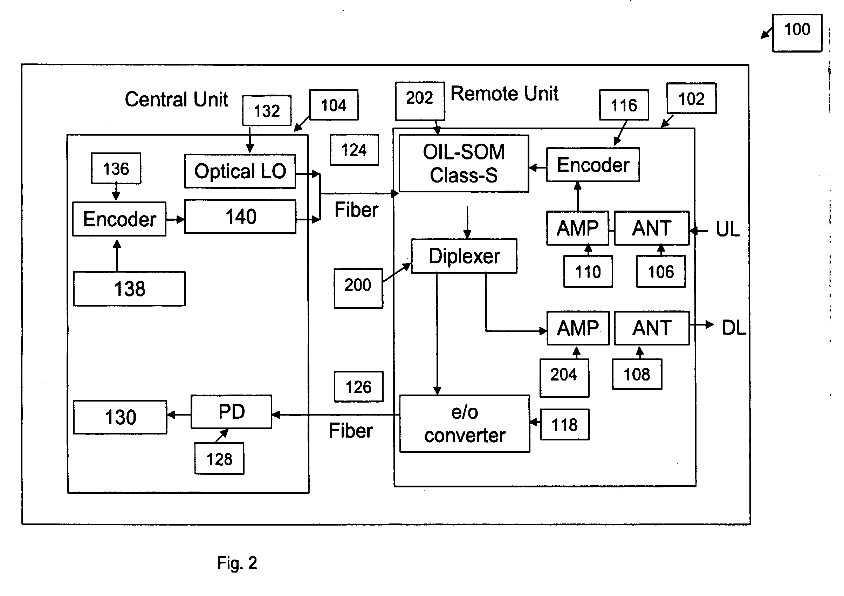

Fig. 2 is a block diagram of a base station 100 with a remote unit 102 and a central unit 104. The remote unit 102 comprises an uplink antenna 106 and a downlink antenna 108. The remote unit 102 further comprises amplifier 110, encoder 116, and electro-optical converter 118, which emits a first light beam. Furthermore, the remote unit 102 comprises a diplexer 200, and an optically injection-locked self-oscillating mixer with two optical and two electrical inputs. The central unit 104 comprises a photodiode 128, a signal processing circuit 130, receiving means 138, encoder 136, light source 140 and first optical local oscillator 132. The remote unit 102 and the central unit 104 are connected via optical channels 124 and 126. The optical channels 124 and 126 may for example be optical fiber cables.

In operation, an analogue downlink signal is received by receiving means 138. The analogue downlink signal may also be referred to as the second analogue electrical signal (see above). The analogue downlink signal may for example be generated in base station 100 or received by base station 100 and transmitted to receiving means 138. The analogue downlink signal is encoded into a digitized downlink signal in encoder 136. The output of encoder 136 may also be referred to as the fourth digitized electrical signal (see above). Light source 140 emits a second light beam, which is split into a third and a fourth light beam in a splitter (not depicted). The third light beam is modulated by the digitized downlink signal. The third light beam then comprises the digitized optical downlink signal, which may also be referred to as the first digitally modulated optical signal (see above). The fourth light beam is modulated by a first local oscillator frequency originating from optical local oscillator 132. The third and the fourth light beam are transmitted via optical channel 124 to OIL-SOM 202.

The first local oscillator frequency is used for mixing with an uplink signal. The uplink signal originates from uplink antenna 106 and has been amplified by amplifier 110 and digitized by encoder 116. The amplified analogue uplink signal may also be referred to as the first analogue electrical signal and the digitized uplink signal may also be referred to as the second digitized electrical signal (see above). In other words, the digitized electrical uplink signal is mixed in OIL-SOM 202 with the first local oscillator frequency originating from optical local oscillator 132. Additionally OIL-SOM 202 is adapted for receiving the third light beam, which carries the digitized downlink signal. The optical digitized downlink signal is converted in OIL-SOM 202 into an electrical digitized downlink signal. The mixed electrical digitized uplink signal and the electrical digitized downlink signal are both transmitted to diplexer 200, which separates the mixed electrical digitized uplink signal from the electrical digitized downlink signal. The electrical digitized downlink signal at the output of diplexer 200 may also be referred to as the first digitized electrical signal (see above). The electrical digitized downlink signal is amplified in amplifier 204 and transmitted via antenna 108 to a wireless terminal. The mixed electrical digitized uplink signal is transmitted from the diplexer 200 to electro-optical converter 118, where the mixed electrical digitized uplink signal is converted into a digitized optical uplink signal which is transmitted via optical channel 126 to photodiode 128. The digitized optical uplink signal may also be referred to as the second digitally modulated optical signal (see above). Photodiode 128 converts the digitized optical uplink signal into an electrical uplink signal, which is further processed in signal processing circuit 130. This electrical uplink signal may also be referred to as the third digitized electrical signal. Signal processing may be performed in digital domain because the uplink signal is digital.

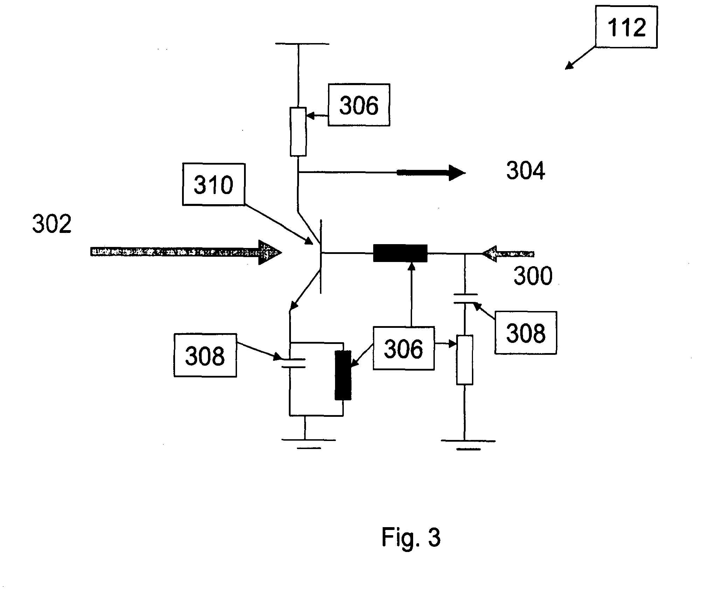

Fig. 3 is a schematic view of an optically injection-locked self-oscillating mixer 112. The optically injection-locked self-oscillating mixer has an electrical input 300, an optical input 302, and an electrical output 304. The OIL-SOM 112 further comprises resistors 306, inductors 306 and capacitors 308. The optical input signal is mixed with the electrical input signal in phototransistor 310. Capacitors 308, resistors 306 and inductors 306 are arranged such that the electrical input signal and the optical input signal are mixed and output at the electrical output 304.

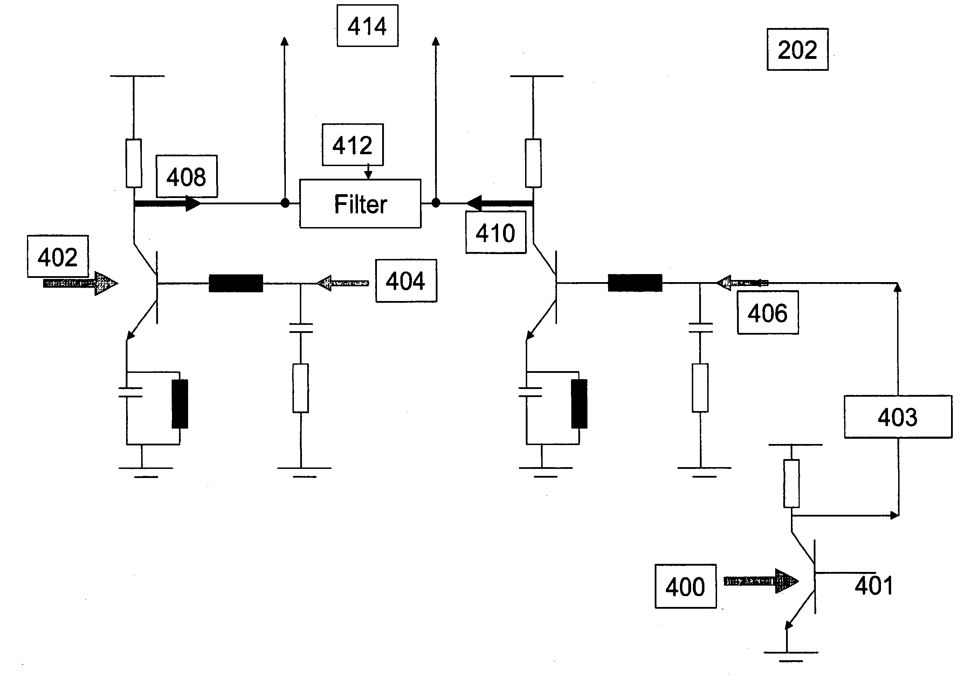

Fig. 4 is a schematic view of an Class-S optically injection-locked self-oscillating mixer 202 with two optical inputs 400 and 402, two electrical inputs 404 and 406, and two electrical outputs 408 and 410. The Class-S optically injection-locked self-oscillating mixer 202 further comprises a phototransistor 401, an inverter 403, a filter 412 and a differential output 414.

The Class-S OIL-SOM is adapted to work as described in the following. Both optical inputs 400 and 402 receive the same light beam, which comprises the downlink and the local oscillator signal. The digital optical light beam received at input 400 is converted in the phototransistor 401 in a first digital electrical signal and then inverted in the inverter 403 in a first digital inverted electrical signal before it is used as an input signal for the electrical input 406. The digital electrical uplink signal is also used as an input signal for the electrical inputs 404 and 406. The output signals 408 and 410 are then a combination of the down-converted uplink signal and the up-converted downlink signal on port 408. The Class-S optically injection-locked self-oscillating mixer 202 outputs at differential output 414 a differential output signal. The differential output signal is the filtered differential signal of signals 408 and 410. Filter 412 filters the differential signal. The differential output signal is then a filtered version of the output signals 408 and 410.

**List of Reference Numerals**

| | |
|---|---|
| 100 | Base station |
| 102 | Remote unit |
| 104 | Central unit |
| 106 | Uplink antenna |
| 108 | Downlink antenna |
| 110 | Amplifier |
| 112 | Optically injection-locked self-oscillating mixer |
| 114 | Filter |
| 116 | Encoder |
| 118 | Converter |
| 120 | Photodiode |
| 122 | Class S amplifier |
| 124 | First optical channel |
| 126 | Second optical channel |
| 128 | Photodiode |
| 130 | Signal processing circuit |
| 132 | Optical local oscillator |
| 134 | Optical local oscillator |
| 136 | Encoder |
| 138 | Receiving means |
| 140 | Light source |
| 200 | Diplexer |
| 202 | Class-S optically injection-locked self-oscillating mixer |
| 204 | Amplifier |
| 300 | Electrical input |
| 302 | Optical input |
| 304 | Electrical output |
| 306 | Resistors and Inductors |
| 308 | Capacitors |
| 310 | Phototransistor |
| 400 | Optical input |
| 401 | Phototransistor |
| 402 | Optical input |
| 403 | Inverter |
| 404 | Electrical input |
| 406 | Electrical input |
| 408 | Electrical output |
| 410 | Electrical output |
| 412 | Filter |
| 414 | Differential output |

## Claims

1. A base station apparatus (100) comprising a central unit (104) for signal processing and a remote unit (102), the remote unit comprising an uplink antenna (106) and a downlink antenna (108), wherein the central unit and the remote unit are connected by a first (124) and a second optical channel (126),
the remote unit further comprising
- first receiving means (112; 120; 202) for receiving a first digitally modulated optical signal from the central unit via the first optical channel, the first receiving means comprising an optically injection-locked self-oscillating mixer (112; 202), wherein the first receiving means comprises a first converter (120; 310) for converting the first digitally modulated optical signal into a first digitized electrical signal, and wherein the optically injection-locked self-oscillating mixer comprises an electrical input (300), an optical input (302) and an electrical output (304);
- first transmitting means (118) for transmitting a second digitally modulated optical signal to the central unit via the second optical channel, the first transmitting means comprising a second converter for converting a second digitized electrical signal into a second digitally modulated optical signal, wherein the first transmitting means comprises a first light source for emitting a first light beam;
- a first encoder (116) for encoding a first analogue electrical signal into a
second digitized electrical signal; and
the central unit comprising
- a third converter (128) for receiving the second digitally modulated optical signal and for converting the second digitally modulated optical signal into a third digitized electrical signal;
- second transmitting means for transmitting the first digitally modulated optical signal to the remote unit via the first optical channel, wherein the second transmitting means comprises a second light source for emitting a second light beam;
- a second encoder (136) for encoding a second analogue electrical signal into a fourth digitized electrical signal;
- a splitter for splitting the second light beam of the second light source into at least a third and a fourth light beam, and
- a first local oscillator (132) for generating a first local oscillator frequency for modulating the third light beam, and wherein a first modulator is adapted to modulate the fourth light beam by the fourth digitized electrical signal
wherein the uplink antenna is adapted for receiving an analogue uplink signal, and wherein a first amplifier in the remote unit is adapted for amplifying the analogue uplink signal;
wherein the amplified uplink signal is adapted to be put into the optically injection-locked self-oscillating mixer at the electrical input;
wherein a filter (114) is adapted for filtering the electrical output signal of the optically
injection-locked self-oscillating mixer, and wherein the filtered electrical output signal is the first analogue electrical signal,
wherein the first encoder is adapted to encode the first analogue electrical signal
into the second digitized electrical signal;
wherein the second converter is adapted for converting the second digitized electrical
signal into the second digitally modulated optical signal by modulating the first light beam with the second digitized electrical signal;
wherein the third converter is adapted for receiving the second digitally modulated
optical signal and converting it into the third digitized electrical signal, the third digitized electrical signal being adapted to be processed by signal processing means (130) in the central unit;
wherein an analogue downlink signal is the second analogue electrical signal, wherein
the second encoder encodes the second analogue electrical signal into the fourth digitized electrical signal;
wherein the first optical channel is adapted to transmit the third, fourth, and fifth light
beam to the first receiving means of the remote unit, the first receiving means comprising an optical separator,
wherein the optical separator is adapted to separate the fifth light beam from the third
and the fourth light beam, wherein the separator is further adapted to transmit the fifth light beam to the optical input of the optically injection-locked self-oscillating mixer,
wherein the first converter is adapted to convert the third and the fourth light beam into
the first digitized electrical signal, the first converter further being adapted to transmit the first digitized electrical signal to a class-S power amplifier (122),
wherein the class-S power amplifier is adapted to amplify the first digitized electrical
signal, the class-S power amplifier comprising a filter for converting the amplified first digitized signal into a third analogue electrical signal;
wherein the downlink antenna is adapted to emit the third analogue electrical signal.

2. Base station according to claim 1, wherein the uplink antenna and the downlink antenna are comprised by one single uplink and downlink antenna, wherein the uplink and downlink antenna is adapted to receive and transmit signals from and to wireless terminals.

3. Base station according to any of the preceding claims, wherein the first and second light source are located in the central unit.

4. Base station according to any one of the preceding claims, wherein the central unit further comprises a second local oscillator (134), wherein the splitter splits the second light beam into the third, the fourth, and a fifth light beam, wherein a second modulator is adapted to modulate the fifth light beam by a second local oscillator frequency of the second local oscillator.

5. Base station according to any one of the claims 1-3, wherein the uplink antenna is adapted for receiving an analogue uplink signal, and wherein the first amplifier in the remote unit is adapted to amplify the analogue uplink signal;
wherein the amplified uplink signal is the first analogue electrical signal, wherein the first encoder is adapted to encode the first analogue electrical signal into the second digitized electrical signal;
wherein the electrical input of the optically injection-locked self-oscillating mixer is adapted to receive the second digitized electrical signal;
wherein a diplexer (200) is adapted to receive the electrical output signal of the optically injection-locked self-oscillating mixer, the electrical output signal comprising the second digitized electrical signal;
wherein the diplexer is adapted to transmit the second digitized electrical signal to the second converter, the second converter being adapted to convert the second digitized electrical signal into the second digitally modulated optical signal by modulating the first light beam with the first digitized electrical signal ;
wherein the third converter is adapted for receiving the second digitally modulated optical signal and converting it into the third digitized electrical signal, wherein signal processing means (130) in the central unit is adapted to process the third digitized electrical signal;
wherein an analogue downlink signal is the second analogue electrical signal, wherein the second encoder is adapted to encode the second analogue electrical signal into the fourth digitized electrical signal;
wherein the first optical channel is adapted to transmit the third and fourth light beam to the first receiving means of the remote unit;
wherein the third and fourth light beam are the first digitally modulated optical signal, wherein the optical input of the optically injection-locked self-oscillating mixer is adapted to receive the first digitally modulated optical signal, the electrical output signal of the optically injection-locked self-oscillating mixer comprising the first digitized electrical signal; and
wherein the diplexer is adapted to transmit the first digitized electrical signal to a second amplifier (204), the second amplifier comprising a filter for converting the first digitized signal into a third analogue electrical signal; or
wherein the diplexer is adapted to convert the first digitized signal into a third analogue electrical signal, the second amplifier being adapted to amplify the third analogue electrical signal; and
wherein the downlink antenna is adapted to emit the amplified third analogue electrical signal.

6. Base station according to claim 5, wherein the optically injection-locked self-oscillating mixer comprises a first (400) and a second optical input (402), a first (404) and a second electrical input (406), and a filter (412), wherein the first optical input is adapted to receive the third light beam, and wherein the second optical input is adapted to receive the fourth light beam.

7. Base station according to any of the preceding claims, wherein the first converter is a photodiode or a phototransistor and wherein the light source is a laser or a light emitting diode.

8. Base station according to any of the preceding claims, wherein the optical channels are one or more optical fibres.

9. Base station according to any of the preceding claims, wherein the optical channels are free space optical paths.

## Patentansprüche

1. Basisstationsvorrichtung (100) mit einer Zentraleinheit (104) zur Signalverarbeitung und einer Ferneinheit (102), wobei die Ferneinheit eine Uplink-Antenne (106) und eine Downlink-Antenne (108) umfasst, wobei die Zentraleinheit und die Ferneinheit über einen ersten (124) und einen zweiten (126) optischen Kanal verbunden sind, wobei die Ferneinheit weiterhin umfasst:
- Ein erstes Empfangsmittel (112; 120; 202) für den Empfang, über den ersten optischen Kanal, eines ersten digital modulierten optischen Signals von der Zentraleinheit, wobei das erste Empfangsmittel einen optisch injektionsverriegelten selbstschwingenden Mischer (112; 202) umfasst, wobei das erste Empfangsmittel einen ersten Wandler (120; 310) zum Umwandeln des ersten digital modulierten optischen Signals in ein erstes digitalisiertes elektrisches Signal umfasst, und wobei der optisch injektionsverriegelte selbstschwingende Mischer einen elektrischen Eingang (300), einen optischen Eingang (302) und einen elektrischen Ausgang (304) umfasst;
- ein erstes Übertragungsmittel (118) für die Übertragung, über den zweiten optischen Kanal, eines zweiten digital modulierten optischen Signals an die Zentraleinheit, wobei das Übertragungsmittel einen zweiten Wandler zum Umwandeln eines zweiten digitalisierten elektrischen Signals in ein zweites digital moduliertes optisches Signal umfasst, wobei das erste Übertragungsmittel eine erste Lichtquelle zum Aussenden eines ersten Lichtstrahls umfasst;
- einen ersten Codierer 116) zum Codieren eines ersten analogen elektrischen
Signals in ein zweites digitalisiertes elektrisches Signal; und
wobei die Zentraleinheit umfasst:
- Einen dritten Wandler (128) für den Empfang des zweiten digital modulierten optischen Signals und für die Umwandlung des zweiten digital modulierten Signals in ein drittes digitalisiertes elektrisches Signal;
- ein zweites Übertragungsmittel für die Übertragung, über den ersten optischen Kanal, des ersten digital modulierten optischen Signals an die Ferneinheit, wobei das zweite Übertragungsmittel eine zweite Lichtquelle zum Aussenden eines zweiten Lichtstrahls umfasst;
- einen zweiten Codierer (136) zum Codieren eines zweiten analogen elektrischen Signals in ein viertes digitales elektrisches Signal;
- einen Strahlteiler zum Aufspalten des zweiten Lichtstrahls der zweiten Lichtquelle in mindestens einen dritten und einen vierten Lichtstrahl, und
- einen ersten lokalen Oszillator (132) für die Erzeugung einer ersten lokalen Oszillatorfrequenz zum Modulieren des dritten Lichtstrahls, und wobei ein erster Modulator dazu ausgelegt ist, den vierten Lichtstrahl durch das vierte digitalisierte elektrische Signal zu modulieren;
wobei die erste Uplink-Antenne dazu ausgelegt ist, ein analoges Uplink-Signal zu
empfangen, und
wobei ein erster Verstärker in der Ferneinheit dazu ausgelegt ist, das analoge Uplink-Signal zu verstärken;
wobei das verstärkte Uplink-Signal geeignet ist, um in den optisch
injektionsverriegelten selbstschwingenden Mischer an dem elektrischen Eingang eingegeben zu werden;
wobei ein Filter (114) dazu ausgelegt ist, das elektrische Ausgangssignal des optisch
injektionsverriegelten selbstschwingenden Mischer zu filtern, und wobei das gefilterte elektrische Ausgangssignal das erste analoge elektrische Signal ist;
wobei der erste Codierer dazu ausgelegt ist, das erste analoge elektrische Signal in
das zweite digitalisierte elektrische Signal zu codieren;
wobei der zweite Wandler dazu ausgelegt ist, das zweite digitalisierte elektrische
Signal durch Modulieren des ersten Lichtstrahls mit dem zweiten digitalisierten elektrischen Signal in das zweite digital modulierte optische Signal umzuwandeln;
wobei der dritte Wandler dazu ausgelegt ist, das zweite digital modulierte optische
Signal zu empfangen und in das dritte digitalisierte elektrische Signal umzuwandeln, wobei das dritte digitalisierte elektrische Signal geeignet ist, um von einem Signalverarbeitungsmittel (130) in der Zentraleinheit verarbeitet zu werden;
wobei ein analoges Downlink-Signal das zweite analoge elektrische Signal ist, wobei
der zweite Codierer das zweite analoge elektrische Signal in das vierte digitalisierte elektrische Signal umwandelt;
wobei der erste optische Kanal dazu ausgelegt ist, den dritten, vierten und fünften
Lichtstrahl an das erste Empfangsmittel der Ferneinheit zu übertragen, wobei das erste Empfangsmittel eine optische Trennvorrichtung umfasst;
wobei die optische Trennvorrichtung dazu ausgelegt ist, den fünften Lichtstrahl von
dem dritten und dem vierten Lichtstrahl zu trennen, wobei die Trennvorrichtung weiterhin dazu ausgelegt ist, den fünften Lichtstrahl an den optischen Eingang des optisch injektionsverriegelten selbstschwingenden Mischers zu übertragen, wobei der erste Wandler dazu ausgelegt ist, den dritten und den vierten Lichtstrahl in
das erste digitalisierte elektrische Signal umzuwandeln, wobei der erste Wandler weiterhin dazu ausgelegt ist, das erste digitalisierte elektrische Signal an einen Klasse-S-Leistungsverstärker (122) zu übertragen;
wobei der Klasse-S-Leistungsverstärker dazu ausgelegt ist, das erste digitalisierte
elektrische Signal zu verstärken, wobei der Klasse-S-Leistungsverstärker einen Filter zum Umwandeln des verstärkten ersten digitalisierten Signals in ein drittes analoges elektrisches Signal umfasst;
wobei die Downlink-Antenne dazu ausgelegt ist, das dritte analoge elektrische Signal
auszusenden.

2. Basisstation nach Anspruch 1, wobei die Uplink-Antenne und die Downlink-Antenne in einer einzigen Uplink- und Downlink-Antenne umfasst sind, wobei die Uplink- und Downlink-Antenne dazu ausgelegt ist, Signale von drahtlosen Endgeräten zu empfangen und an diese zu übertragen.

3. Basisstation nach einem beliebigen der vorstehenden Ansprüche, wobei die erste und die zweite Lichtquelle in der Zentraleinheit angeordnet sind.

4. Basisstation nach einem beliebigen der vorstehenden Ansprüche, wobei die Zentraleinheit weiterhin einen zweiten lokalen Oszillator (134) umfasst, wobei der Strahlteiler den zweiten Lichtstrahl in den dritten, den vierten und einen fünften Lichtstrahl aufspaltet, wobei ein zweiter Modulator dazu ausgelegt ist, den fünften Lichtstrahl mit einer zweiten lokalen Oszillatorfrequenz des zweiten lokalen Oszillators zu modulieren.

5. Basisstation nach einem beliebigen der Ansprüche 1-3, wobei die Uplink-Antenne dazu ausgelegt ist, ein analoges Uplink-Signal zu empfangen, und wobei der erste Verstärker in der Ferneinheit dazu ausgelegt ist, das analoge Uplink-Signal zu verstärken;
wobei das verstärkte Uplink-Signal das erste analoge elektrische Signal ist, wobei der erste Codierer dazu ausgelegt ist, das erste analoge elektrische Signal in das zweite digitalisierte elektrische Signal zu codieren;
wobei der elektrische Eingang des optisch injektionsverriegelten selbstschwingenden Mischers dazu ausgelegt ist, das zweite digitalisierte elektrische Signal zu empfangen;
wobei ein Diplexer (200) dazu ausgelegt ist, das elektrische Ausgangssignal des optisch injektionsverriegelten selbstschwingenden Mischers zu empfangen, wobei das elektrische Ausgangssignal das zweite digitalisierte elektrische Signal umfasst; wobei der Diplexer dazu ausgelegt ist, das zweite digitalisierte elektrische Signal an den zweiten Wandler zu übertragen, wobei der zweite Wandler dazu ausgelegt ist, das zweite digitalisierte elektrische Signal durch Modulieren des ersten Lichtstrahls mit dem ersten digitalisierten elektrischen Signal in das zweite digital modulierte optische Signal umzuwandeln;
wobei der dritte Wandler dazu ausgelegt ist, das zweite digital modulierte optische Signal zu empfangen und in das dritte digitalisierte elektrische Signal umzuwandeln, wobei das Signalverarbeitungsmittel (130) in der Zentraleinheit dazu ausgelegt ist, das dritte digitalisierte elektrische Signal zu verarbeiten;
wobei ein analoges Downlink-Signal das zweite analoge elektrische Signal ist,
wobei der zweite Codierer dazu ausgelegt ist, das zweite analoge elektrische Signal in das vierte digitalisierte elektrische Signal umzuwandeln;
wobei der erste optische Kanal dazu ausgelegt ist, den dritten und vierten Lichtstrahl an das erste Empfangsmittel der Ferneinheit zu übertragen,
wobei der dritte und der vierte Lichtstrahl das erste digital modulierte optische Signal sind, wobei der optische Eingang des optisch injektionsverriegelten selbstschwingenden Mischers dazu ausgelegt ist, das erste digital modulierte optische Signal zu empfangen, wobei das elektrische Ausgangssignal des optisch injektionsverriegelten selbstschwingenden Mischers das erste digitalisierte elektrische Signal umfasst; und
wobei der Diplexer dazu ausgelegt ist, das erste digitalisierte elektrische Signal an einen zweiten Verstärker (204) zu übertragen, wobei der zweite Verstärker einen Filter zum Umwandeln des ersten digitalisierten Signals in ein drittes analoges elektrisches Signal umfasst; oder
wobei der Diplexer dazu ausgelegt ist, das erste digitalisierte Signal in ein drittes analoges elektrisches Signal umzuwandeln, wobei der zweite Verstärker dazu ausgelegt ist, das dritte analoge elektrische Signal zu verstärken; und
wobei die Downlink-Antenne dazu ausgelegt ist, das verstärkte dritte analoge elektrische Signal auszusenden.

6. Basisstation nach Anspruch 5, wobei der optisch injektionsverriegelte selbstschwingende Mischer einen ersten (400) und einen zweiten (402) optischen Eingang, einen ersten (404) und einen zweiten (406) elektrischen Eingang und einen Filter (412) umfasst, wobei der erste optische Eingang für den Empfang des dritten Lichtstrahls ausgelegt ist, und wobei der zweite optische Eingang für den Empfang des vierten Lichtstrahls ausgelegt ist.

7. Basisstation nach einem beliebigen der vorstehenden Ansprüche, wobei der erste Wandler eine Fotodiode oder ein Fototransistor ist, und wobei die Lichtquelle ein Laser oder eine lichtemittierende Diode ist.

8. Basisstation nach einem beliebigen der vorstehenden Ansprüche, wobei die optischen Kanäle eine oder mehrere optische Fasern sind.

9. Basisstation nach einem beliebigen der vorstehenden Ansprüche, wobei die optischen Kanäle optische Freiraum-Pfade sind.

## Revendications

1. Appareil de station de base (100) comprenant une unité centrale (104) pour le traitement de signaux et une unité distante (102), l'unité distante comprenant une antenne de liaison montante (106) et une antenne de liaison descendante (108), dans lequel l'unité centrale et l'unité distante sont reliées par un premier canal optique (124) et un deuxième canal optique (126),
l'unité distante comprenant en outre
- des premiers moyens de réception (112 ; 120 ; 202) pour recevoir un premier signal optique modulé numériquement à partir de l'unité centrale par l'intermédiaire du premier canal optique, les premiers moyens de réception comprenant un mélangeur auto-oscillant optiquement verrouillé par injection (112 ; 202), dans lequel les premiers moyens de réception comprennent un premier convertisseur (120 ; 310) pour convertir le premier signal optique modulé numériquement en un premier signal électrique numérisé, et dans lequel le mélangeur auto-oscillant optiquement verrouillé par injection comprend une entrée électrique (300), une entrée optique (302) et une sortie électrique (304) ;
- des premiers moyens d'émission (118) pour émettre un deuxième signal optique modulé numériquement vers l'unité centrale par l'intermédiaire du deuxième canal optique, les premiers moyens d'émission comprenant un deuxième convertisseur pour convertir un deuxième signal électrique numérisé en un deuxième signal optique modulé numériquement, dans lequel les premiers moyens d'émission comprennent une première source de lumière pour émettre un premier faisceau de lumière ;
- un premier codeur (116) pour coder un premier signal électrique
analogique en un deuxième signal électrique numérisé ; et
l'unité centrale comprenant
- un troisième convertisseur (128) pour recevoir le deuxième signal optique modulé numériquement et pour convertir le deuxième signal optique modulé numériquement en un troisième signal électrique numérisé ;
- des deuxièmes moyens d'émission pour émettre le premier signal optique modulé numériquement vers l'unité distante par l'intermédiaire du premier canal optique, dans lequel les deuxièmes moyens d'émission comprennent une deuxième source de lumière pour émettre un deuxième faisceau de lumière ;
- un deuxième codeur (136) pour coder un deuxième signal électrique analogique en un quatrième signal électrique numérisé ;
- un diviseur pour diviser le deuxième faisceau de lumière de la deuxième source de lumière en au moins un troisième faisceau de lumière et un quatrième faisceau de lumière, et
- un premier oscillateur local (132) pour générer une première fréquence d'oscillateur local pour moduler le troisième faisceau de lumière, et dans lequel un premier modulateur est adapté pour moduler le quatrième faisceau de lumière au moyen du quatrième signal électrique numérisé dans lequel l'antenne de liaison montante est adaptée pour recevoir un signal de liaison montante analogique, et dans lequel un premier amplificateur dans l'unité distante est adapté pour amplifier le signal de liaison montante analogique ;
dans lequel le signal de liaison montante amplifié est adapté pour être placé dans le
mélangeur auto-oscillant optiquement verrouillé par injection au niveau de l'entrée électrique,
dans lequel un filtre (114) est adapté pour filtrer le signal de sortie électrique du
mélangeur auto-oscillant optiquement verrouillé par injection, et dans lequel le signal de sortie électrique filtré est le premier signal électrique analogique,
dans lequel le premier codeur est adapté pour coder le premier signal électrique
analogique en un deuxième signal électrique numérisé ;
dans lequel le deuxième convertisseur est adapté pour convertir le deuxième signal
électrique numérisé en un deuxième signal optique modulé numériquement en modulant le premier faisceau de lumière avec le deuxième signal électrique numérisé ;
dans lequel le troisième convertisseur est adapté pour recevoir le deuxième signal optique
modulé numériquement et pour le convertir en un troisième signal électrique numérisé, le troisième signal électrique numérisé étant adapté pour être traité par des moyens de traitement de signaux (130) dans l'unité centrale ;
dans lequel un signal de liaison descendante analogique est le deuxième signal électrique
analogique, dans lequel le deuxième codeur code le deuxième signal électrique analogique en un quatrième signal électrique numérisé ;
dans lequel le premier canal optique est adapté pour émettre les troisième, quatrième et
cinquième faisceaux de lumière vers les premiers moyens de réception de l'unité distante, les premiers moyens de réception comprenant un séparateur optique, dans lequel le séparateur optique est adapté pour séparer le cinquième faisceau de
lumière du troisième et du quatrième faisceaux de lumière, dans lequel le séparateur est en outre adapté pour émettre le cinquième faisceau de lumière vers l'entrée optique du mélangeur auto-oscillant optiquement verrouillé par injection, dans lequel le premier convertisseur est adapté pour convertir le troisième et le quatrième
faisceaux de lumière en un premier signal électrique numérisé, le premier convertisseur étant en outre adapté pour émettre le premier signal électrique numérisé vers un amplificateur de puissance de classe S (122),
dans lequel l'amplificateur de puissance de classe S est adapté pour amplifier le premier
signal électrique numérisé, l'amplificateur de puissance de classe S comprenant un filtre pour convertir le premier signal numérisé amplifié en un troisième signal électrique analogique ;
dans lequel l'antenne de liaison descendante est adaptée pour émettre le troisième signal
électrique analogique.

2. Station de base selon la revendication 1, dans laquelle l'antenne de liaison montante et l'antenne de liaison descendante comprennent une antenne de liaison montante et de liaison descendante, dans laquelle l'antenne de liaison montante et de liaison descendante est adaptée pour recevoir des signaux à partir des terminaux sans fil et pour émettre des signaux vers les terminaux sans fil.

3. Station de base selon l'une quelconque des revendications précédentes, dans laquelle la première et la deuxième sources de lumière sont situées dans l'unité centrale.

4. Station de base selon l'une quelconque des revendications précédentes, dans laquelle l'unité centrale comprend en outre un deuxième oscillateur local (134), dans laquelle le diviseur divise le deuxième faisceau de lumière en un troisième, un quatrième et un cinquième faisceaux de lumière, dans laquelle un deuxième modulateur est adapté pour moduler le cinquième faisceau de lumière au moyen d'une deuxième fréquence d'oscillateur local du deuxième oscillateur local.

5. Station de base selon l'une quelconque des revendications 1 à 3, dans laquelle l'antenne de liaison montante est adaptée pour recevoir un signal de liaison montante analogique, et dans laquelle le premier amplificateur dans l'unité distante est adapté pour amplifier le signal de liaison montante analogique ;
dans laquelle le signal de liaison montante amplifié est le premier signal électrique analogique, dans laquelle le premier codeur est adapté pour coder le premier signal électrique analogique en un deuxième signal électrique numérisé ;
dans laquelle l'entrée électrique du mélangeur auto-oscillant optiquement verrouillé par injection est adaptée pour recevoir le deuxième signal électrique numérisé ; dans laquelle un diplexeur (200) est adapté pour recevoir le signal de sortie électrique du mélangeur auto-oscillant optiquement verrouillé par injection, le signal de sortie électrique comprenant le deuxième signal électrique numérisé ;
dans laquelle le diplexeur est adapté pour émettre le deuxième signal électrique numérisé vers le deuxième convertisseur, le deuxième convertisseur étant adapté pour convertir le deuxième signal électrique numérisé en un deuxième signal optique modulé numériquement en modulant le premier faisceau de lumière avec le premier signal électrique numérisé ;
dans laquelle le troisième convertisseur est adapté pour recevoir le deuxième signal optique modulé numériquement et pour le convertir en un troisième signal électrique numérisé, dans laquelle des moyens de traitement de signaux (130) dans l'unité centrale sont adaptés pour traiter le troisième signal électrique numérisé ;
dans laquelle un signal de liaison descendante analogique est le deuxième signal électrique analogique, dans laquelle le deuxième codeur est adapté pour coder le deuxième signal électrique analogique en un quatrième signal électrique numérisé ; dans laquelle le premier canal optique est adapté pour émettre le troisième et le quatrième faisceaux de lumière vers les premiers moyens de réception de l'unité distante ;
dans laquelle le troisième et le quatrième faisceaux de lumière sont le premier signal optique modulé numériquement, dans laquelle l'entrée optique du mélangeur auto-oscillant optiquement verrouillé par injection est adaptée pour recevoir le premier signal optique modulé numériquement, le signal de sortie électrique du mélangeur auto-oscillant optiquement verrouillé par injection comprenant le premier signal électrique numérisé ; et
dans laquelle le diplexeur est adapté pour émettre le premier signal électrique numérisé vers un deuxième amplificateur (204), le deuxième amplificateur comprenant un filtre pour convertir le premier signal numérisé en un troisième signal électrique analogique ; ou
dans laquelle le diplexeur est adapté pour convertir le premier signal numérisé en un troisième signal électrique analogique, le deuxième amplificateur étant adapté pour amplifier le troisième signal électrique analogique ; et
dans laquelle l'antenne de liaison descendante est adaptée pour émettre le troisième signal électrique analogique amplifié.

6. Station de base selon la revendication 5, dans laquelle le mélangeur auto-oscillant optiquement verrouillé par injection comprend une première entrée optique (400) et une deuxième entrée optique (402), une première entrée électrique (404) et une deuxième entrée électrique (406) et un filtre (412), dans laquelle la première entrée optique est adaptée pour recevoir le troisième faisceau de lumière, et dans laquelle la deuxième entrée optique est adaptée pour recevoir le quatrième faisceau de lumière.

7. Station de base selon l'une quelconque des revendications précédentes, dans laquelle le premier convertisseur est une photodiode ou un phototransistor et dans laquelle la source de lumière est un laser ou une diode électroluminescente.

8. Station de base selon l'une quelconque des revendications précédentes, dans laquelle les canaux optiques sont une ou plusieurs fibres optiques.

9. Station de base selon l'une quelconque des revendications précédentes, dans laquelle les canaux optiques sont des trajets optiques en espace libre.
